# EUROPEAN PATENT APPLICATION

(11) **EP 1 270 454 A1**
(43) Date of publication of application: **02.01.2003**
(21) Application number: 02405458.7
(22) Date of filing: 06.06.2002
(51) Int. Cl.: B65G 17/08

(54) **Flush grid belt module**

(30) Priority: 20.06.2001 US 885511
(71) Applicant: Habasit AG, CH-4153 Reinach (CH)
(72) Inventor: Guldenfels, Dieter, 4148 Pfeffingen (CH)
(74) Representative: Bollhalder, Renato

(57) **Abstract**

A belt module having link ends (29, 32) that are beveled inwardly, in the vicinity of the pivot rod opening (38), from a first transverse width (50; 150) at the upper surface (36) of the link end (29, 32) to a second transverse width (53) at the center of the pivot rod opening (38). From there, the link ends (29, 32) have a uniform transverse width (53) extending to the lower module surface (41). The transverse width (50) of the upper surface (36) of the link ends (29, 32) is such that when adjacent link ends (29, 32) are coupled together by a pivot rod, the intercalated modules provide a gap-free upper surface between adjacent link ends (29, 32) in the transverse direction, aligned with the pivot rod. This structure completely covers the pivot rod from the upper module surface while the beveled structure exposes portions of the pivot rod from the lower surface (41) for cleaning.

## Description

### FIELD OF INVENTION

This invention relates to conveyor belts and, more particularly, to modular plastic conveyor belts formed of rows of plastic belt modules pivotally interlinked by transverse pivot rods.

### BACKGROUND OF THE INVENTION

Because they are light weight, do not corrode, and are easy to clean, unlike metal conveyor belts, plastic conveyor belts are used widely, especially in conveying food products. Modular plastic conveyor belts are made up of molded plastic modular links, or belt modules, that can be arranged side by side in rows of selectable width. A series of spaced apart link ends extending from each side of the modules include aligned apertures or slots to accommodate a pivot rod. The link ends along one end of a row of modules are interconnected with the link ends of an adjacent row. A pivot rod journaled in the aligned apertures of the side-by-side and end-to-end connected modules forms a hinge between adjacent rows. Rows of belt modules are connected together to form an endless conveyor belt capable of articulating about a drive sprocket.

In order to avoid having parts of the goods that are to be conveyed, such as food particles, from entering into the apertures or slots in the link ends and contacting the pivot rods, which can cause unsanitary conditions, modular conveying belts are typically designed such that the pivot rods are completely enclosed.

Typically, the link ends are narrow and in an assembled conveyor belt, the interconnected link ends completely enclose the pivot rods where they pass through the link ends. Having large portions of the pivot rods fully enclosed at all times by the link ends prevents thorough cleaning of both the pivot rods and their apertures or slots, unless the conveying belt is dismantled. Accordingly, what is needed is a conveyor belt constructed of modules designed such that the pivot rods and the link end apertures or slots can be cleaned better without dismantling the belt.

### SUMMARY OF THE INVENTION

This object is achieved by the belt module according to independent claim 1 and the modular belt according to independent claim 11. Preferred embodiments are defined in the dependent claims.

The present invention meets the above-described need by providing link ends that are beveled inwardly, in the vicinity of the pivot rod opening, from a first transverse width at the upper surface of the link end to a second transverse width at the center of the pivot rod opening. From there, the link ends have a uniform transverse width extending to the lower module surface. The transverse width of the upper surface of the link ends is such that when adjacent links are coupled together by a pivot rod, the intercalated modules provide a gap-free upper surface between adjacent link ends in the transverse direction, aligned with the pivot rod. This structure completely covers the pivot rod from the upper module surface while the beveled structure exposes portions of the pivot rod from the lower surface for cleaning.

In a first embodiment, a plurality of belt modules are intercalated by pivot rods to form a modular belt. The belt modules are provided with a sinusoidal-shaped intermediate section that supports a first plurality of link ends and a second plurality of link ends disposed opposite the first link ends. The link ends have slots disposed transverse to the direction of belt travel for receiving the pivot rods.

In a second embodiment, the belt modules are provided with an intermediate section that is shaped in the form of a cross bar. The cross bar has a two-tiered profile with an upper cross bar section and a lower cross bar section. The lower section is narrower than the upper section.

### BRIEF DESCRIPTION OF THE DRAWINGS

The invention is illustrated in the drawings in which like reference characters designate the same or similar parts throughout the figures of which:
Fig. 1 is a top plan view of a first embodiment of the belt module of the present invention;
Fig. 2 is a bottom plan view of the belt module of Fig. 1;
Fig. 3 is a sectional view taken along lines 3-3 of Fig. 1;
Fig. 4 is a top plan view of a modular belt having a plurality of belt modules interconnected by pivot rods;
Fig. 5 is a bottom plan view of the modular belt of Fig. 4;
Fig. 5A is a detailed plan view of a portion of the modular belt shown in Fig. 5;
Fig. 6 is a partial perspective view of the belt module of Fig. 1;
Fig. 7 is a top plan view of an alternate embodiment of the belt module of the present invention;
Fig. 8 is a bottom plan view of the belt module of Fig. 7;
Fig. 9 is a sectional view taken along lines 9-9 of Fig. 7;
Fig. 10 is a bottom plan view of a modular belt having a plurality of belt modules interconnected by transverse pivot rods;
Fig. 10A is a detailed plan view of a portion of the modular belt shown in Fig. 10; and,
Fig. 11 is a partial perspective view of the belt module of Fig. 7.

### DETAILED DESCRIPTION

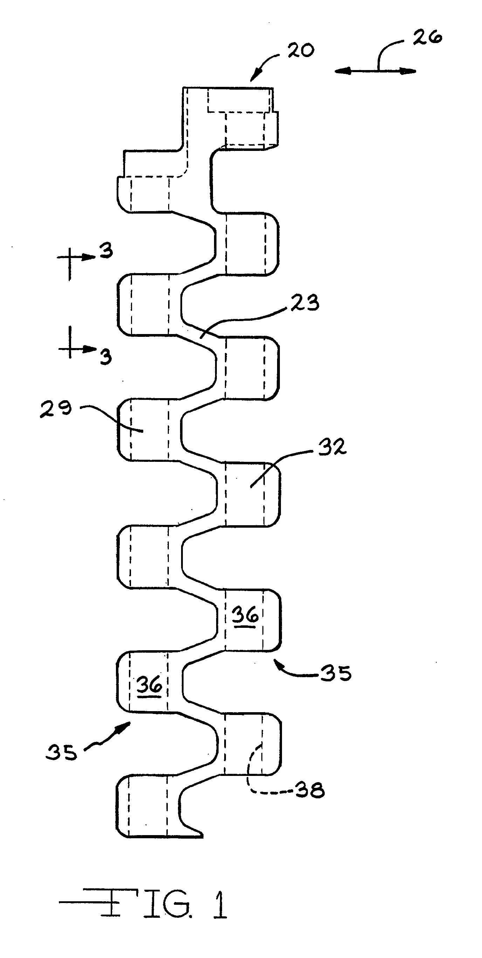

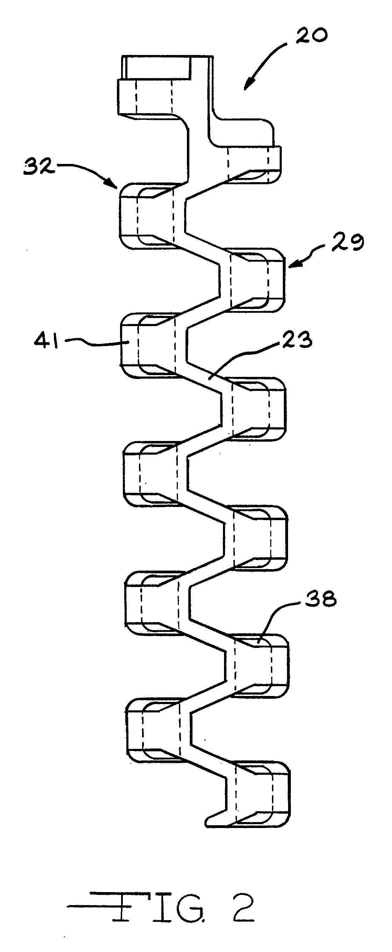

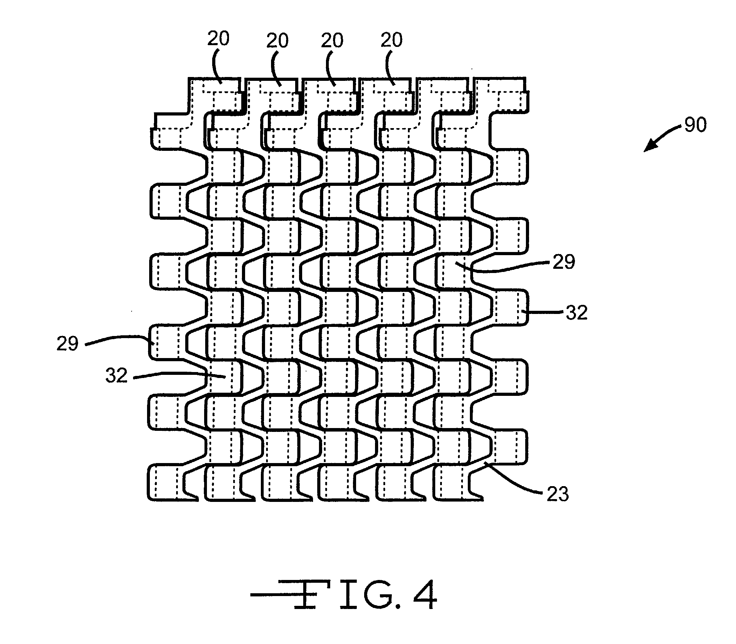

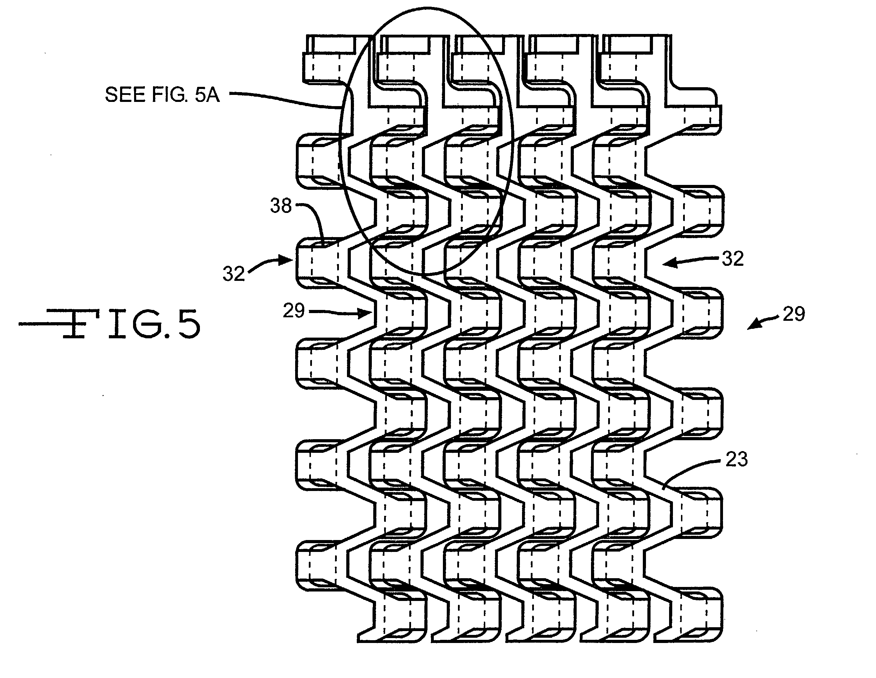

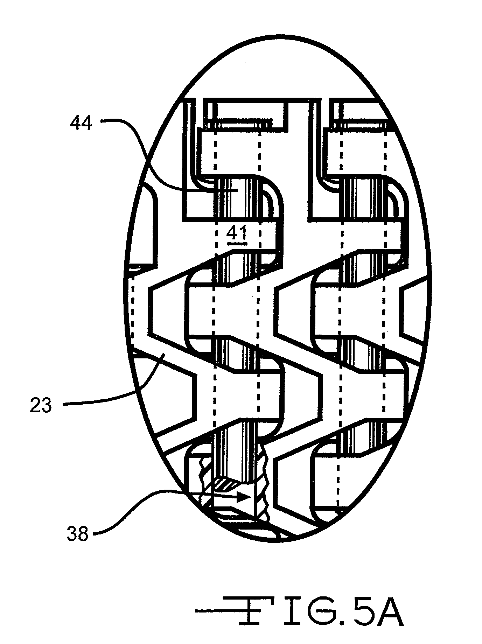

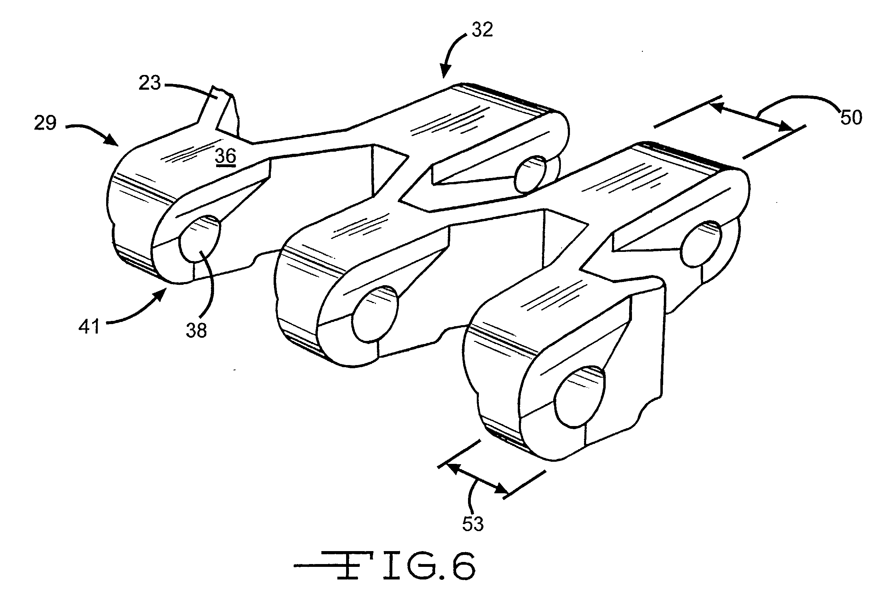

Referring to Figs. 1-6 and initially to Fig. 1, a belt module 20 includes an intermediate section 23 that is disposed transverse to the direction of belt travel indicated by arrow 26. The intermediate section 23 has a generally sinusoidal shape with a series of alternating peaks and troughs. A first plurality of link ends 29 extend from the peaks of the intermediate section 23. A second plurality of link ends 32 extend from the troughs of the intermediate section 23. Each link end 29, 32 extends along the direction of belt travel to a distal portion 35 having a planar upper surface 36. A transverse opening 38 is provided in each link end 29, 32. The opening 38 is disposed transverse to the direction of belt travel and is located between the upper module surface 36 and a lower module surface 41 (Fig. 2). The opening 38 receives a pivot rod 44 (Fig. 5A) that intercalates adjacent belt modules 20 to form a modular belt 90 (Fig. 4).

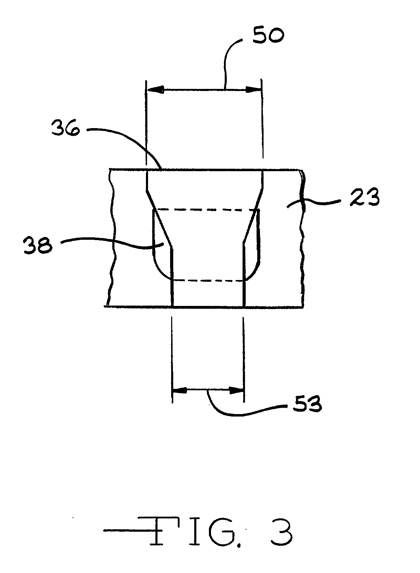

Turning to Fig. 2, in the vicinity of the pivot rod opening 38, the link ends 29, 32 are beveled inwardly from a first transverse width 50 at the upper surface 36 of the link end 29, 32 to a second transverse width 53 at the center of the pivot rod opening 38 (best shown in Fig. 3). As shown in Fig. 3, from there the link ends 29, 32 have a uniform transverse width extending to the lower module surface. As an alternative, the link ends 29, 32 can be beveled all the way from the upper surface 36 to the lower module surface thereby eliminating the uniform transverse width referred to above.

Turning to Fig. 4, the transverse width 50 of the upper surface 36 of the link ends 29, 32 is such that when adjacent link ends 29, 32 are coupled together by the pivot rod 44 (Fig. 5A), the modules 20 form a belt 90 that provides a gap-free upper surface between adjacent link ends 29, 32 in the transverse direction aligned with the pivot rod 44.

Accordingly, the pivot rod 44 is completely covered from the upper surface 36.

In Fig. 5, the lower surface 41 of the belt module 20 is shown and in Fig. 5A it is shown in greater detail. The beveled structure exposes portions of the pivot rod 44 from the lower surface 41 for cleaning.

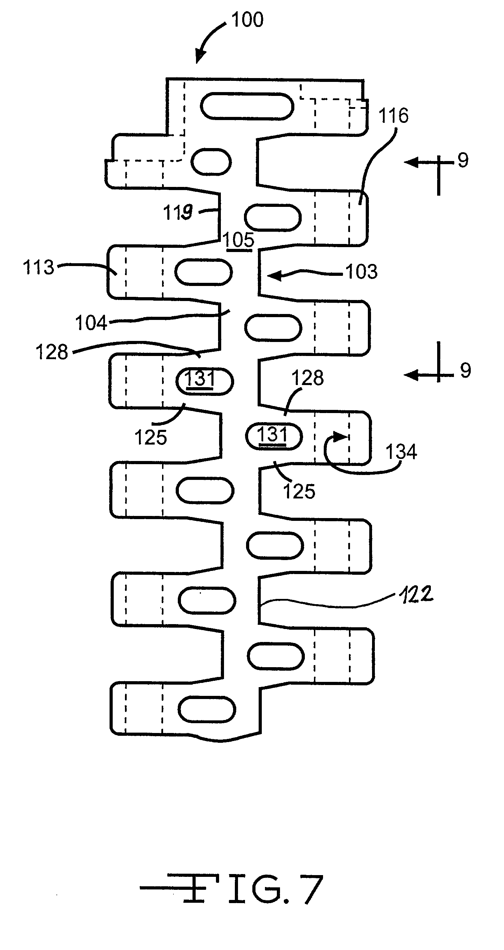

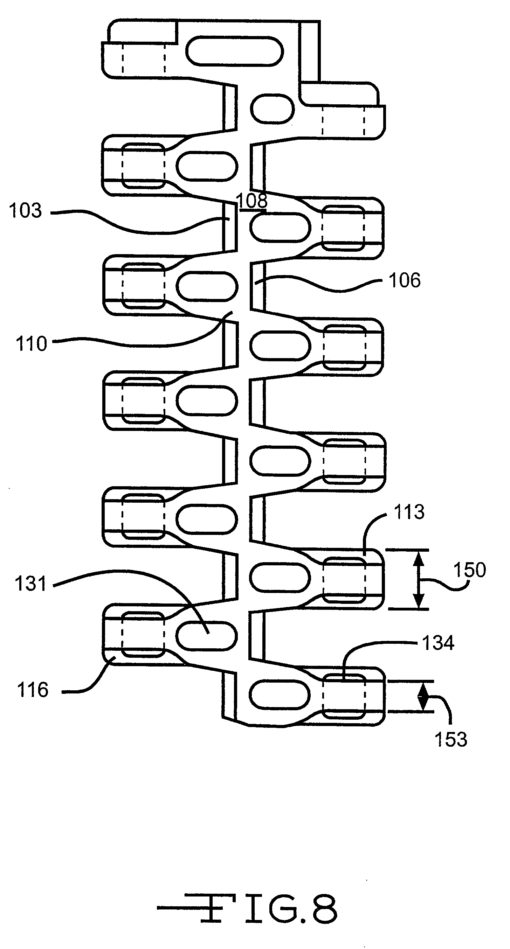

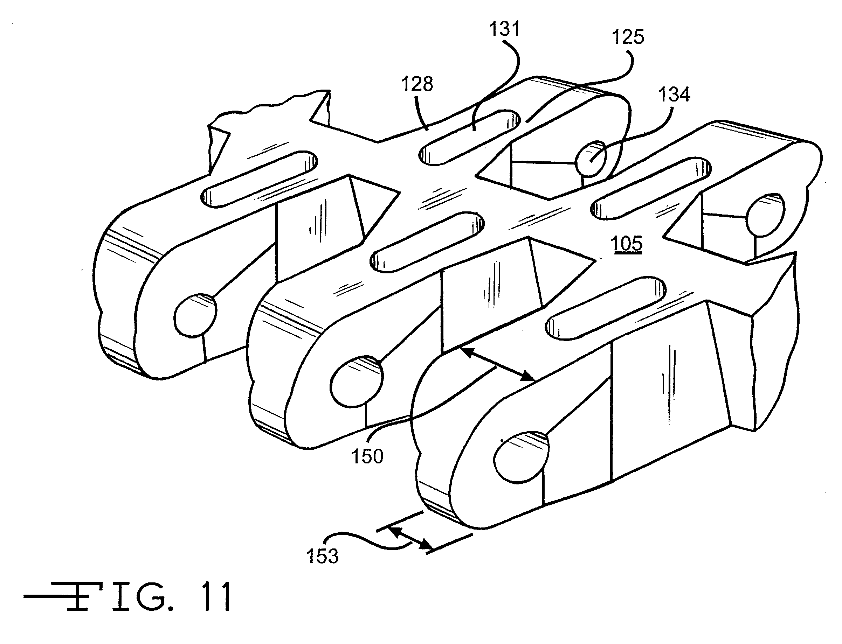

Turning to Figs. 7-11, belt module 100 is an alternate embodiment of the present invention. Instead of a sinusoidal shaped intermediate section 23, belt module 100 has a cross bar 103 that is disposed across the lateral width of the module, transverse to the direction of conveyor belt travel. The cross bar 103 comprises an upper cross bar portion 104 extending from the upper module surface 105 to a transition zone 106 disposed between the upper surface 105 and the lower module surface 108. The transition zone comprises the section where the upper cross bar portion 104 forms into a lower cross bar portion 110 having a reduced width in the direction of conveyor belt travel and extending to the lower module surface 108.

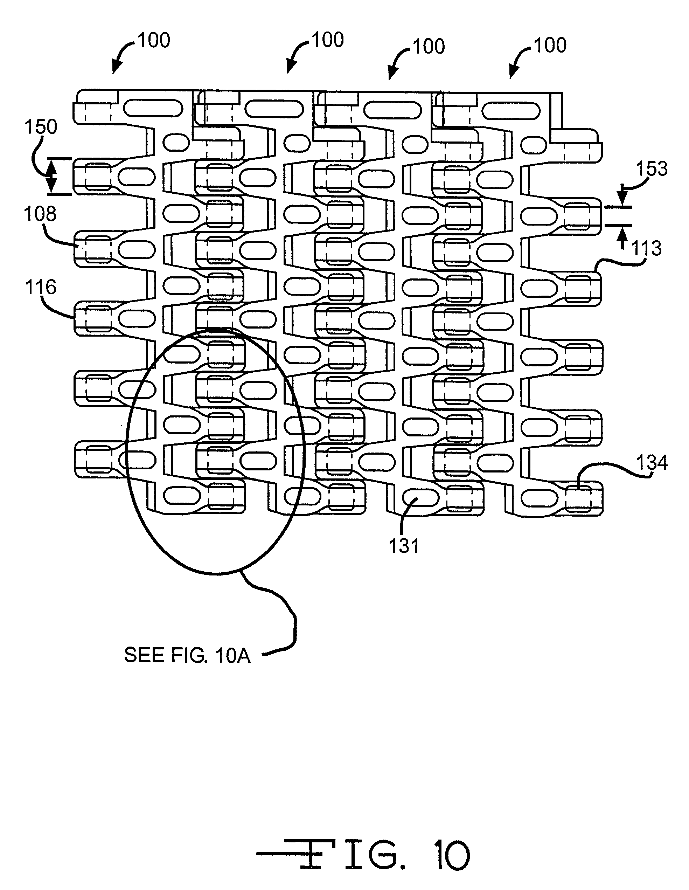

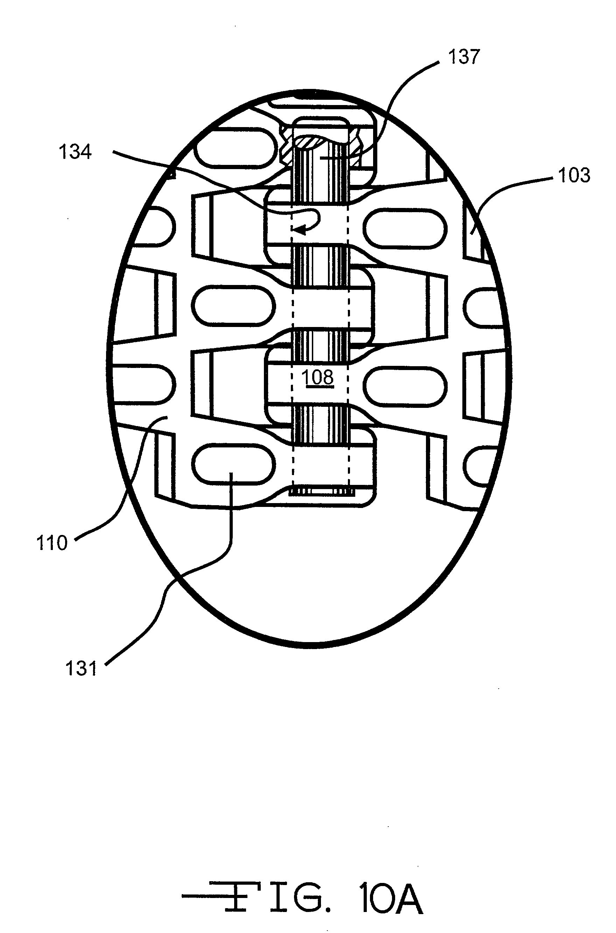

The cross bar 103 supports a first plurality of link ends 113 from a forward wall 119 and supports a second plurality of link ends 116 from a rearward wall 122. Each link end 113, 116 includes a pair of leg portions 125, 128 extending from the cross bar 103 along the direction of conveyor belt travel to a distal portion having a planar upper surface. An opening 131 is disposed between the leg portions 125, 128. Each link end 113, 116 also includes a transverse opening 134 provided between the upper and lower surfaces for receiving a pivot rod 137 (Fig. 10A).

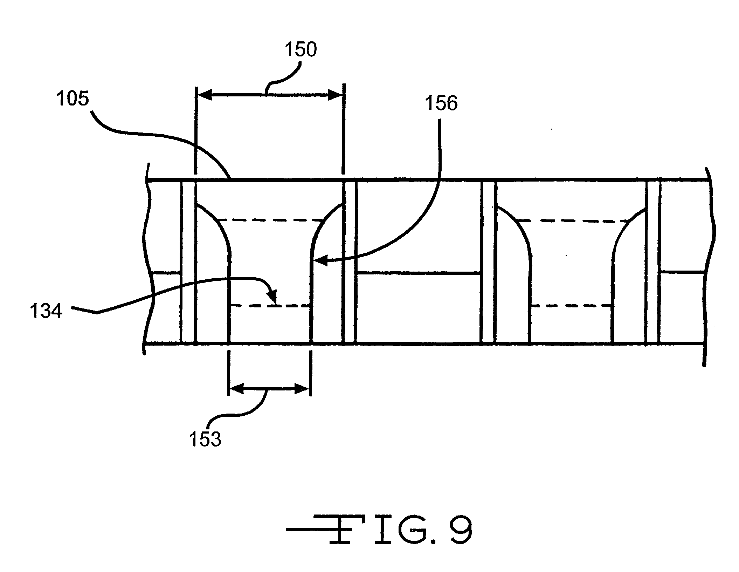

In the vicinity of the pivot rod 137, the link ends 113, 116 are beveled inwardly from a first transverse width 150 at the upper surface 105 of the link end to a second transverse width 153 at the center 156 of the pivot rod opening 134. As shown in Fig. 9, from there the link ends have a uniform transverse width extending to the lower module surface 108. As an alternative, the link ends 113, 116 can be beveled all the way from the upper surface 105 to the lower module surface thus eliminating the uniform transverse width referred to above.

In Fig. 10, a plurality of belt modules 100 are shown from the bottom side. For clarity, the pivot rods 137 are not shown. The transverse width of the upper surface of the link ends 113, 116 is such that when adjacent modules 100 are coupled together by the pivot rod 137, the modules provide a gap-free upper surface between adjacent link ends in the transverse direction, aligned with the pivot rod 137. This structure completely covers the pivot rod 137 from the upper module surface.

In contrast, the beveled structure exposes portions of the pivot rod from the lower surface for cleaning.

While the invention has been described in connection with certain preferred embodiments, it is not intended to limit the scope of the invention to the particular forms set forth, but, on the contrary, it is intended to cover such alternatives, modifications, and equivalents as may be included within the spirit and scope of the invention as defined by the appended claims.

## Claims

1. Belt module (20; 100), comprising:
an intermediate section (23; 103);
a first plurality of link ends (29; 113) extending from the intermediate section (23; 103) in a direction of belt travel, the link ends (29; 113) having a first surface (36; 105) having a first width (50; 150) transverse to the direction of belt travel and having a second surface (41; 108) with a second width (53; 153) transverse to the direction of belt travel, the first width (50; 150) being greater than the second width (53; 153), the first plurality of link ends (29; 113) having a first opening (38; 134) disposed transverse to the direction of belt travel and located between the first and second surfaces (36, 41; 105, 108); and,
a second plurality of link ends (32; 116) extending from the intermediate section (23; 103) in direction opposite the direction of belt travel, the link ends (32; 116) having a first surface (36; 105) having a first width (50; 150) transverse a direction of belt travel and having a second surface (41; 108) with a second width (53; 153) transverse to the direction of belt travel, the first width (50; 150) being greater than the second width (53; 153), the second plurality of link ends (32; 116) having a first opening (38; 134) disposed transverse to the direction of belt travel and located between the first and second surfaces (36, 41; 105, 108).

2. Belt module (20; 100) according to Claim 1, wherein the first plurality of link ends (29; 113) are beveled inwardly from the first transverse width (50; 150) to the second transverse width (53; 153).

3. Belt module (20; 100) according to Claim 1 or 2, wherein the second plurality of link ends (32; 116) are beveled inwardly from the first transverse width (50; 150) to the second transverse width (53; 153).

4. Belt module (20; 100) according to anyone of Claims 1 to 3, wherein the first plurality of link ends (29; 113) are beveled inwardly from the first transverse width (50; 150) at the first surface (36; 105) to the second transverse width (53; 153) at a central portion (156) of the first opening (38; 134).

5. Belt module (20; 100) according to Claim 4, wherein the first plurality of link ends (29; 113) have a uniform second transverse width (53; 153) between the central portion (156) and the second surface (41; 108).

6. Belt module (20; 100) according to anyone of Claims 1 to 5, wherein the second plurality of link ends (32; 116) are beveled inwardly from the first transverse width (50; 150) at the first surface (36; 105) to the second transverse width (53; 153) at a central portion (156) of the first opening (38; 134).

7. Belt module (20; 100) according to Claim 6, wherein the second plurality of link ends (32; 116) have a uniform second transverse width (53; 153) between the central portion (156) and the second surface (41; 108).

8. Belt module (20) according to anyone of Claims 1 to 7, wherein the intermediate section (23) has a sinusoidal shape.

9. Belt module (100) according to anyone of Claims 1 to 7, wherein the intermediate section comprises a cross bar (103).

10. Belt module (100) according to Claim 9, wherein the intermediate section (103) further comprises an upper cross bar portion (104) and a lower cross bar portion (110).

11. Modular belt (90), comprising:
a plurality of belt modules (20; 100) having an intermediate section (23; 103), a first plurality of link ends (29; 113) extending from the intermediate section (23; 103) in a direction of belt travel, the link ends (29; 113) having a first surface (36; 105) having a first width (50; 150) transverse to the direction of belt travel and having a second surface (41; 108) with a second width (53; 153) transverse to the direction of belt travel, the first width (50; 150) being greater than the second width (53; 153), the first plurality of link ends (29; 113) having a first opening (38; 134) disposed transverse to the direction of belt travel and located between the first and second surfaces (36, 41; 105, 108), and a second plurality of link ends (32; 116) extending from the intermediate section (23; 103) in direction opposite the direction of belt travel, the link ends (32; 116) having a first surface (36; 105) having a first width (50; 150) transverse a direction of belt travel and having a second surface (41; 108) with a second width (53; 153) transverse to the direction of belt travel, the first width (50; 150) being greater than the second width (53; 153), the second plurality of link ends (32; 116) having a first opening (38; 134) disposed transverse to the direction of belt travel and located between the first and second surfaces (36, 41; 105, 108); and
a pivot rod (44; 137) disposed through the transverse first openings in the first and second link ends (29, 32; 113, 116) of adjacent belt modules (20; 100).

12. Modular belt (90) according to Claim 11, wherein the first plurality of link ends (29; 113) are beveled inwardly from the first transverse width (50; 150) to the second transverse width (53; 153).

13. Modular belt (90) according to Claim 11 or 12, wherein the second plurality of link ends (32; 116) are beveled inwardly from the first transverse width (50; 150) to the second transverse width (53; 153).

14. Modular belt (90) according to anyone of Claims 11 to 13, wherein the first plurality of link ends (29; 113) are beveled inwardly from the first transverse width (50; 150) at the first surface (36; 105) to the second transverse width (53; 153) at a central portion (156) of the first opening (38; 134).

15. Modular belt (90) according to Claim 14, wherein the first plurality of link ends (29; 113) have a uniform second transverse width (53; 153) between the central portion (156) and the second surface (41; 108).

16. Modular belt (90) according to anyone of Claims 11 to 15, wherein the second plurality of link ends (32; 116) are beveled inwardly from the first transverse width (50; 150) at the first surface (36; 105) to the second transverse width (53; 153) at a central portion (156) of the first opening (38; 134).

17. Modular belt (90) according to Claim 16, wherein the second plurality of link ends (32; 116) have a uniform second transverse width (53; 153) between the central portion (156) and the second surface (41; 108).

18. Modular belt (90) according to anyone of Claims 11 to 17, wherein the intermediate section (23) has a sinusoidal shape.

19. Modular belt according to anyone of Claims 11 to 17, wherein the intermediate section comprises a cross bar (103).

20. Modular belt according to Claim 19, wherein the intermediate section (103) further comprises an upper cross bar portion (104) and a lower cross bar portion (110).
